# FASCICULE DE BREVET EUROPEEN

(11) **EP 3 320 599 B1**
(45) Date de publication et mention de la délivrance du brevet: **23.11.2022**
(21) Numéro de dépôt: 16741561.1
(22) Date de dépôt: 07.07.2016
(51) Int. Cl.: H02K 1/30, F02D 11/10, F02D 9/10, F16K 31/04, H02K 7/00, F02M 26/70, F02M 26/54

(54) **ACTIONNEUR ÉLECTROMAGNÉTIQUE À ENTRAINEMENT DIRECT**
ELEKTROMAGNETISCHER AKTUATOR MIT DIREKTANTRIEB
DIRECT-DRIVE ELECTROMAGNETIC ACTUATOR

(30) Priorité: 07.07.2015 FR 1556448
(43) Date de publication de la demande: 16.05.2018
(73) Titulaire: MMT SA, 6304 Zug (CH)
(72) Inventeur: MELLERE, Cédric, 25190 Soulce Cernay (FR); BROSSARD, Olivier, 25470 Fessevillers (FR)
(74) Mandataire: IP Trust
(86) Numéro de dépôt international: PCT/EP2016/066176
(87) Numéro de publication internationale: WO 2017/005870

(56) Documents cités:
- EP-A2- 2 597 294
- WO-A1-2004/084376
- WO-A1-2014/072605
- DE-A1-102008 018 460
- JP-A- 2001 352 701

## Description

### DOMAINE TECHNIQUE DE L'INVENTION

L'invention se rapporte au domaine des systèmes électriques d'entrainement et plus particulièrement aux actionneurs électromagnétiques destinés à entrainer en rotation et en prise directe un élément mobile appartenant à un système mécanique complémentaire tel que des vannes intervenant dans la régulation de la circulation de fluide pour applications industrielles, automobiles notamment.

La liaison entre la partie mobile de l'actionneur et l'organe spécifique entrainé en rotation se fait traditionnellement au moyen d'un arbre d'accouplement réalisant la transmission du mouvement. Généralement, la partie mobile de l'actionneur comporte ses propres moyens de guidage par palier pour assurer la qualité du positionnement, et l'organe spécifique entrainé comporte également ses propres moyens de guidage, notamment par palier. La multiplication des paliers de guidage dans l'actionneur et dans le système mécanique complémentaire entraine un phénomène hyperstatique sur l'axe d'accouplement.

De manière spécifique mais non limitative, l'invention concerne le domaine particulier des vannes motorisées. Ces vannes, constituées principalement d'un conduit de forme sensiblement tubulaire dans lequel se trouve un clapet d'obturation apte à fermer plus ou moins le conduit, sont présentes dans de nombreuses applications industrielles, notamment automobiles, où elles interviennent dans la régulation de fluide, essentiellement au niveau de la boucle d'air du moteur à combustion du côté admission et du côté échappement. Le clapet d'obturation est lié via un arbre de transmission à un actionneur de type électromagnétique conçu pour déplacer et positionner correctement le clapet dans le conduit entre une première position extrême correspondant à une ouverture maximum du conduit et une deuxième position extrême correspondant à une fermeture maximum du conduit, avec un niveau d'étanchéité donné.

Selon leur localisation sur la boucle d'air du moteur à combustion, ces vannes peuvent être fabriquées en métal ou en plastique, les clapets sont directement fixés ou reliés par l'intermédiaire d'un mécanisme de réduction à la partie mobile de l'actionneur ; les niveaux d'étanchéité dans la position de fermeture maximum peuvent être plus ou moins exigeants, par exemple un débit de fuite de 30L.min⁻¹ pour une différence de pression ΔP=0.6bar. Pour atteindre ces spécifications, il convient de soigner particulièrement la réalisation du guidage entre le clapet d'obturation et le conduit de la vanne, et la liaison entre la partie mobile de l'actionneur et le clapet.

### ETAT DE LA TECHNIQUE ANTERIEURE

L'état actuel de la technique offre de nombreuses solutions pour des actionneurs à entrainement direct destinés notamment au pilotage de vanne de régulation de fluide.

A titre d'exemple, les brevets WO9211686 et WO2007012711 décrivent un actionneur électromagnétique monophasé destiné à déplacer un organe mobile sur une course limitée, comportant une structure statorique bobinée et un organe mobile à aimant permanent. L'organe mobile est muni d'un arbre d'accouplement rendu solidaire par emmanchement en force de l'extrémité de l'arbre dans la partie ferromagnétique de l'organe mobile. La demande de brevet WO2014072605 revendique une vanne motorisée associant un actionneur électromagnétique selon les brevets WO9211686 et WO2007012711 à une matière surmoulante plastique formant au moins en partie la tubulure de la vanne et solidaire en partie de l'actionneur, le clapet d'obturation étant porté et positionné par l'axe de l'actionneur. Bien que ces solutions présentent des avantages significatifs, notamment via le très faible encombrement des systèmes proposés, des inconvénients majeurs persistent. En effet, l'arbre d'accouplement de l'actionneur est à une première extrémité rigidement solidarisé au rotor de l'actionneur, il porte à sa deuxième extrémité de manière rigide par l'intermédiaire de vis de fixation le clapet d'obturation collaborant avec le conduit. Ainsi pour éviter d'aboutir à un guidage trop hyperstatique de l'arbre d'accouplement, l'arbre d'accouplement n'est guidé que sur sa partie supérieure, au-dessus du clapet, il n'est pas guidé sur sa partie inférieure, au-dessous du clapet. D'une part, le positionnement axial relatif entre le clapet et la tubulure est dépendant des tolérances de fabrication de l'arbre, de la tubulure, de l'actionneur et des procédés d'assemblage notamment la longueur d'emmanchement en force de l'arbre d'accouplement dans le rotor de l'actionneur et la fixation par éléments filetés du clapet sur l'arbre. Des jeux apparaissent alors en position fermée sur les parties supérieures ou inférieures du clapet entre la tubulure et le clapet, dégradant sévèrement les performances d'étanchéité de la vanne requises par l'application. D'autre part, l'absence de reprise de guidage de l'arbre d'accouplement dans sa partie inférieure, sous le clapet, sollicite très fortement les guidages dans sa partie supérieure : les efforts importants induits par ce phénomène de porte-à-faux provoquent des frottements conséquents qui réduisent les performances et le rendement de l'actionneur et qui, à terme, peuvent détruire ces guidages. L'absence de reprise de guidage limite également la rigidité du maintien du clapet dans le conduit, ce qui favorise fortement les fuites sous le clapet, suite à la déformation par flexion de l'arbre d'accouplement et de ses guidages sous l'effet de la pression exercée en position fermée sur le clapet.

**On** connait par ailleurs la demande EP2597294 décrivant une vanne, en particulier pour la recirculation des gaz d'échappement basse pression dans le domaine automobile, associant un actionneur rotatif indépendant intégrant un axe de commande sortant de l'actionneur, l'actionneur intégrant ses propres paliers de guidage de l'axe de commande. Cet actionneur est rapporté et fixé sur une vanne métallique par l'intermédiaire de vis de fixation, l'axe de commande de l'actionneur pénètre à l'intérieur du conduit de la vanne, la vanne intégrant ses propres paliers de guidage de l'axe de commande. La partie de l'axe de commande pénétrant dans le conduit porte de manière rigide par l'intermédiaire de nouvelles vis de fixation un clapet circulaire collaborant avec le conduit de la vanne pour fermer plus ou moins la vanne. Le principal inconvénient de la solution proposée par ce brevet est le caractère hyperstatique du guidage de l'arbre d'entrainement du rotor. Cet arbre est guidé par plusieurs paliers localisés dans l'actionneur et dans la vanne, l'actionneur et la vanne étant ici deux composants distincts reliés entre eux de manière rigide par des vis. Ce type de montage crée ainsi une liaison hyperstatique occasionnant des contraintes importantes sur les guidages dès lors que l'actionneur et la vanne ne sont pas parfaitement et rigoureusement alignés ou dès lors que l'emmanchement en force de l'arbre de commande dans le rotor de l'actionneur n'est pas effectué avec un battement parfait. D'autres solutions proposées dans ce même brevet consistent à intégrer un palier supplémentaire prévu à l'extrémité inférieure de l'arbre sous le clapet d'obturation, ce qui augmente encore ce problème. Un autre inconvénient de cette réalisation réside dans l'obtention des niveaux d'étanchéité requis par l'application en position fermée : là encore le clapet devant collaborer avec la tubulure est rigidement fixé à l'extrémité de l'axe, l'axe étant lui-même rigidement fixé au rotor de l'actionneur, l'actionneur étant lui-même rapporté et rigidement fixé sur la vanne par les vis. Le positionnement du clapet dans le conduit est alors peu précis et des jeux favorisant les fuites apparaissent dans les zones supérieures et inférieures du clapet. Enfin un dernier inconvénient de cette intégration est l'absence de reprise de guidage de l'axe dans la zone inférieure du clapet qui limite la rigidité du maintien du clapet dans le conduit, ce qui favorise fortement les fuites sous le clapet, suite à la déformation par flexion de l'axe de commande et de ses guidages sous l'effet de la pression exercée en position fermée sur le clapet.

On connait alors, dans l'état de la technique, le brevet EP2020492 résolvant le problème d'hyperstatisme en associant un actionneur électrique coopérant avec un capteur de position pour commander le pivotement d'un volet d'étranglement d'une vanne pour moteur à combustion, l'actionneur électrique étant rapporté et fixé sur la vanne d'étranglement par des vis de fixation. Le système décrit comporte des moyens de liaisons créant un découplage mécanique similaire à un joint de cardan entre l'axe de commande et l'axe de pivotement du volet. Bien que pertinente, cette solution comporte de nombreux inconvénients, notamment par la présence nécessaire de deux axes distincts, un dans l'actionneur et un dans la vanne, reliés entre eux par l'introduction d'une pièce supplémentaire qui réalise le découplage mais qui complexifie sévèrement la chaine de transmission du mouvement : l'extrémité des deux axes doivent intégrer des leviers spécifiques dont l'extrémité est sphérique, les tolérances de fabrication et d'assemblage de la pièce supplémentaire ainsi que l'encombrement nécessaire à son intégration et à son montage entre les deux axes augmentent le coût, l'espace nécessaire et réduisent la qualité de la transmission, notamment par l'apparition de jeux résultant de l'usure de cette pièce additionnelle au niveau des extrémités sphériques. D'autres actionneurs électromagnétiques rotatifs génériques sont décrits dans les documents JP 2001 352701 A, WO 2004/084376 A1 et DE 10 2008 018460 A1.

### INCONVENIENTS DE L'ART ANTERIEUR

L'art antérieur offre ainsi de nombreuses solutions dont aucune n'est réellement satisfaisante.

Soit l'arbre d'accouplement est monobloc et unique entre l'actionneur et la vanne, son guidage est alors hyperstatique. Le clapet est directement porté par l'arbre d'accouplement qui est monté flottant et en porte-à-faux dans le conduit, pour éviter un guidage supplémentaire dans la zone inférieure du clapet qui augmenterait encore le degré d'hyperstatisme. Les défaillances liées à l'usure par frottement, les coûts d'usinage élevés de l'arbre et des portées de guidage ainsi que les fuites en position fermée très difficiles à maîtriser rendent cette solution inappropriée.

Soit l'arbre portant le clapet est correctement guidé dans le conduit de part et d'autre du clapet, alors il doit être dissocié et donc accouplé à l'arbre de l'actionneur avec un moyen de liaison évitant les problèmes d'hyperstatisme. Le système intègre alors au minimum deux arbres différents et le moyen de liaison est souvent complexe, encombrant et couteux si l'actionneur est à entrainement direct. On peut avoir recours à un actionnement par moteur à courant continu associé à un réducteur à engrenages mais on perd dans ce cas les avantages de compacité et fiabilité de l'entraînement direct.

### EXPOSE DE L'INVENTION

L'objet de l'invention est ainsi de répondre aux problèmes exposés précédemment en proposant un actionneur à entrainement direct pour vannes motorisées permettant non seulement de solutionner les problématiques d'hyperstatisme mais également de garantir un positionnement précis de l'organe spécifique à piloter dans un encombrement minimum et avec un niveau de fiabilité amélioré.

A cet effet et dans son acceptation la plus générale, l'invention concerne un actionneur électromagnétique rotatif présentant un axe de rotation, comprenant un stator fixe et un rotor mobile autour dudit axe, ledit rotor entraînant par l'intermédiaire d'un arbre de transmission unique un organe extérieur lié audit arbre caractérisé en ce que la liaison entre ledit rotor et ledit arbre est assurée par un moyen de liaison mécanique combinant une liaison de type rotule à doigt et un degré de liberté en translation axiale.

Avantageusement, ledit moyen de liaison mécanique est de forme discale, il est constitué par une partie centrale à haute rigidité isotropique solidaire de l'arbre de transmission, une partie périphérique à haute rigidité tangentielle liée audit rotor et ladite partie centrale et ladite partie périphérique sont liées par l'intermédiaire de n bras 425 s'étendant radialement, chaque bras 425 présentant des rigidités tangentielle et radiale élevées, chaque bras 425 présentant une rigidité axiale faible, n étant ≥ 2, le rapport en la rigidité tangentielle élevée et la rigidité axiale faible étant ≥ 10, le rapport en la rigidité radiale élevée et la rigidité axiale faible étant ≥ 2.5.

Selon une variante, ledit moyen de liaison mécanique est constitué par une matière plastique surmoulant et solidaire de l'extrémité dudit arbre d'entrainement, ledit surmoulage s'étendant jusqu'au rotor.

Selon un mode de réalisation particulier, ledit moyen de liaison mécanique comporte un insert métallique entre ledit surmoulage et ledit arbre de transmission.

Selon une autre variante, le moyen de liaison mécanique comporte une cible magnétique mobile apte à interagir avec un élément sensible récepteur, fixe par rapport à ladite cible, pour fournir un signal de position angulaire.

Selon un mode de réalisation particulier, la cible magnétique est réalisée par bi-injection ou surmoulage dudit moyen de liaison mécanique.

Selon une alternative, ladite cible magnétique est rapportée et fixée par collage sur ledit moyen de liaison mécanique.

Selon un autre mode de réalisation, ledit actionneur comprend un moyen de retour en position de référence sous la forme d'une piste aimantée solidaire dudit stator et apte à interagir sans contact avec ledit rotor pour ramener ledit arbre de commande en une positon prédéterminée par l'intermédiaire dudit moyen de liaison mécanique, lorsque ledit stator n'est plus alimenté en énergie.

L'invention concerne aussi un procédé d'assemblage d'un actionneur électromagnétique selon l'invention et comprenant au moins deux étapes, une première étape consistant à intégrer ledit rotor audit stator et une deuxième étape consistant à insérer ledit arbre équipé dudit moyen de liaison mécanique au travers dudit rotor et dudit stator.

Avantageusement, le procédé selon l'invention peut comporter une troisième étape consistant à fixer audit stator un couvercle comportant ledit élément sensible récepteur.

L'invention concerne encore une vanne motorisée comprenant un actionneur électromagnétique selon l'invention et composée d'un conduit et d'un clapet apte à obturer ledit conduit

Selon une variante, l'arbre de transmission est guidé par deux paliers seulement disposés de part et d'autre dudit clapet dans la zone du conduit.

Avantageusement, lesdits paliers forment des liaisons de type linéaire annulaire avec ledit arbre de transmission.

Selon une variante, le palier inférieur, opposé à l'actionneur, est constitué par un plot en érection par rapport à la paroi intérieure du conduit, et coopérant avec un logement complémentaire prévu dans le clapet.

Selon une autre variante, ledit plot présente une tête hémisphérique apte à former avec ledit logement complémentaire une liaison de type rotule ou de type linéaire annulaire.

Selon un mode de réalisation particulier, la surface intérieure dudit conduit présente une zone localisée autour dudit plot ayant une forme tronconique ou pentue apte à évacuer naturellement sous l'effet de la gravité les particules polluantes susceptibles de s'accumuler à proximité dudit plot.

Avantageusement, le palier du guidage supérieur dudit clapet prévu entre ledit arbre de transmission et ledit stator est un palier enchâssé dans le corps en matière plastique dudit conduit, ledit palier étant étanchéifié par un joint entourant ledit arbre.

Selon une autre variante, le clapet est entouré par un joint périphérique s'étendant sur les deux branches annulaires aptes à venir en appui contre deux épaulements prévus sur la paroi intérieure dudit conduit, et sur les deux surfaces frontales transversales entourant les passages d'arbres.

L'invention concerne encore un procédé d'assemblage d'une vanne motorisée comprenant au moins trois étapes, une première étape consistant à intégrer ledit rotor à ladite vanne, une deuxième étape consistant à intégrer ledit clapet dans la dite conduite et une troisième étape consistant à insérer ledit arbre de transmission équipé dudit moyen de liaison mécanique au travers de ladite vanne.

De préférence, ce procédé comporte une quatrième étape consistant à fixer à ladite vanne un couvercle comportant ledit élément sensible récepteur.

### BREVE DESCRIPTION DES FIGURES

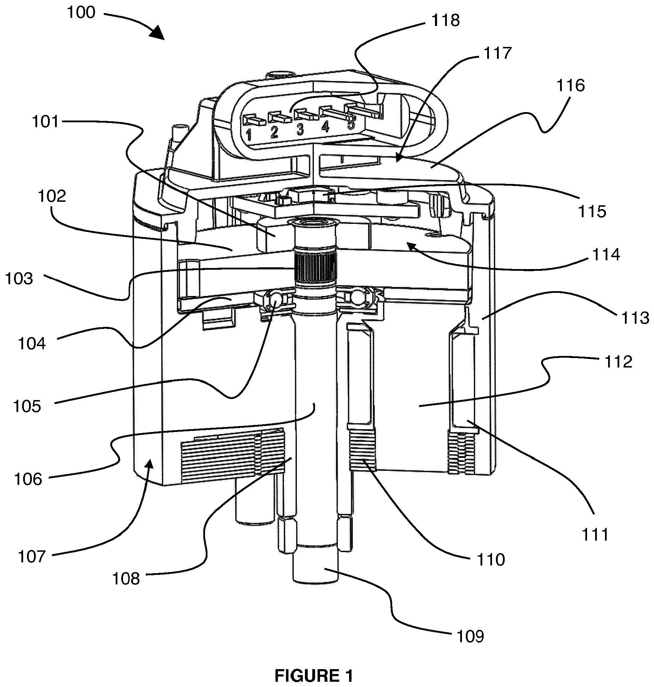

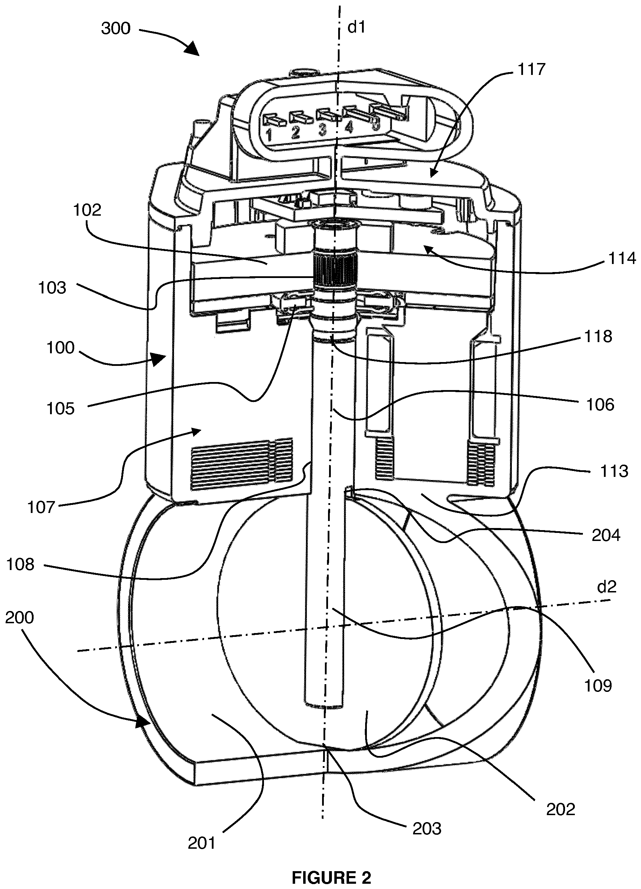

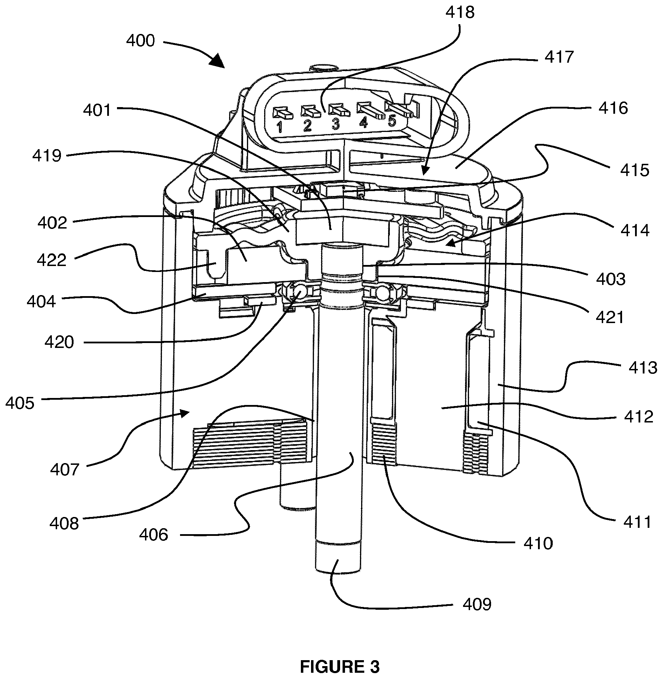

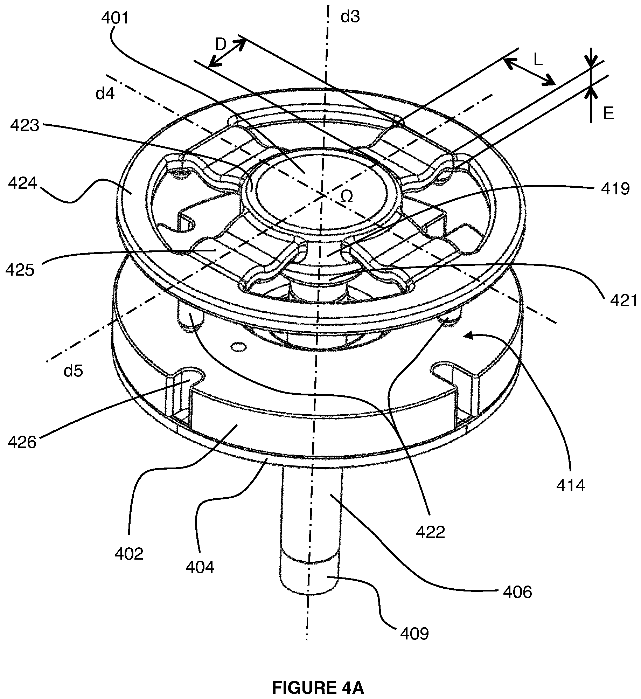

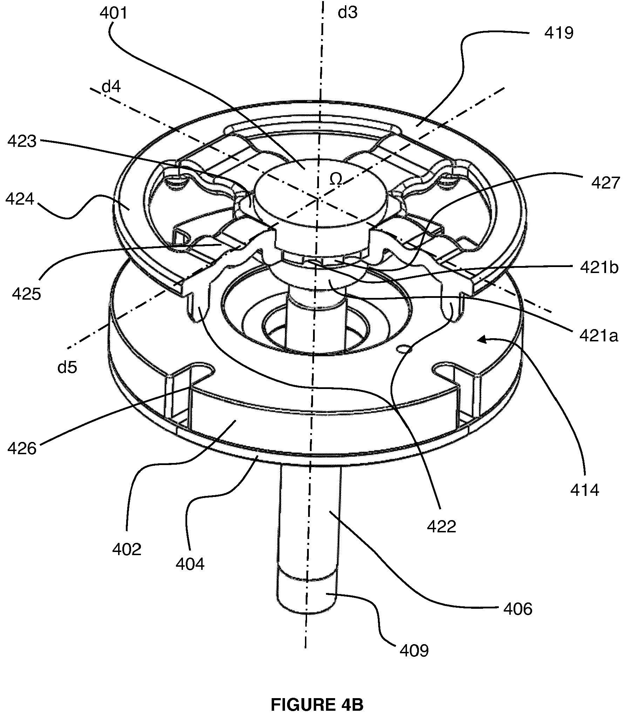

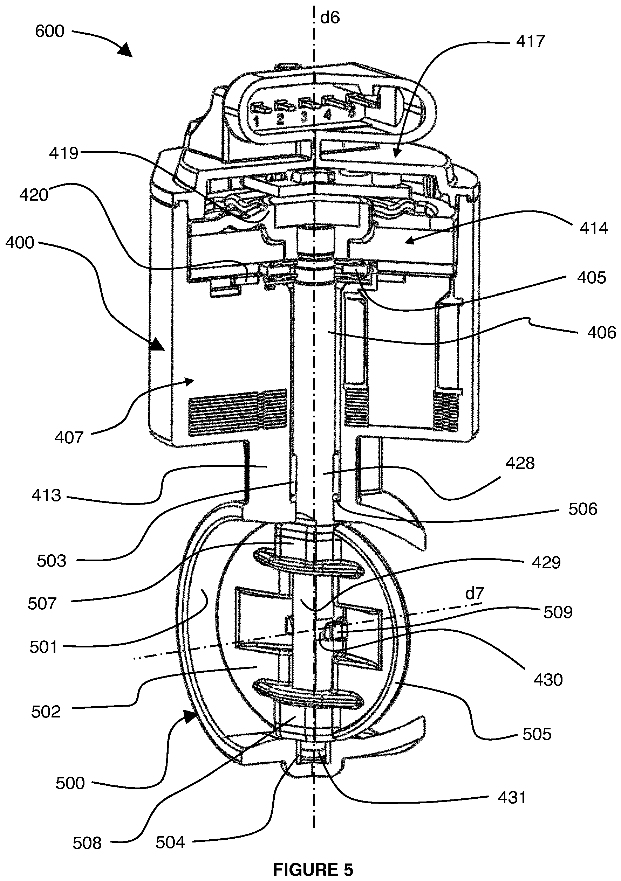

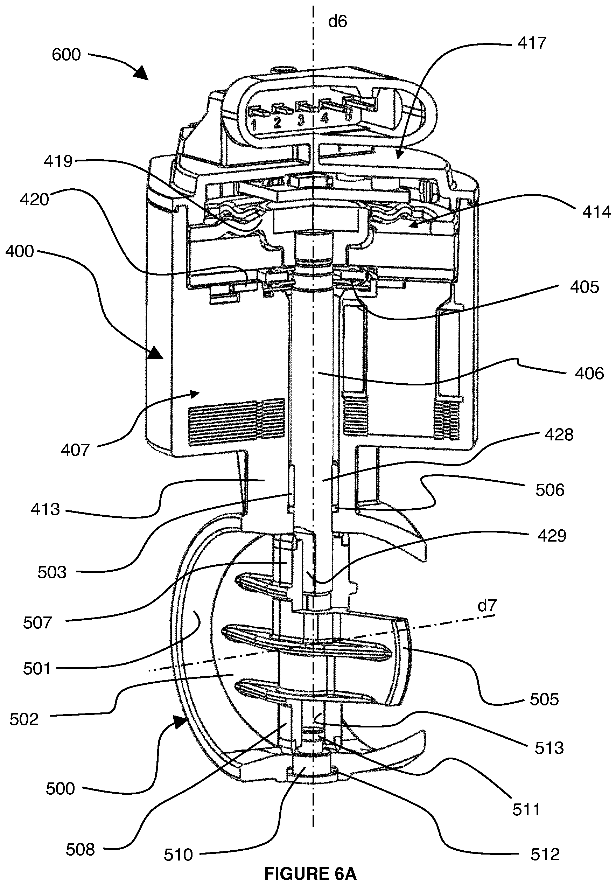

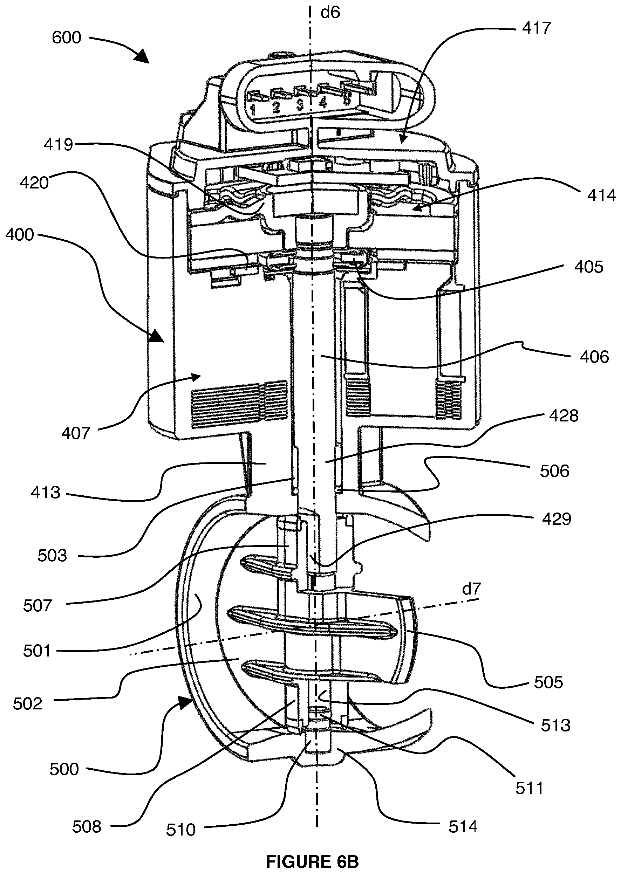

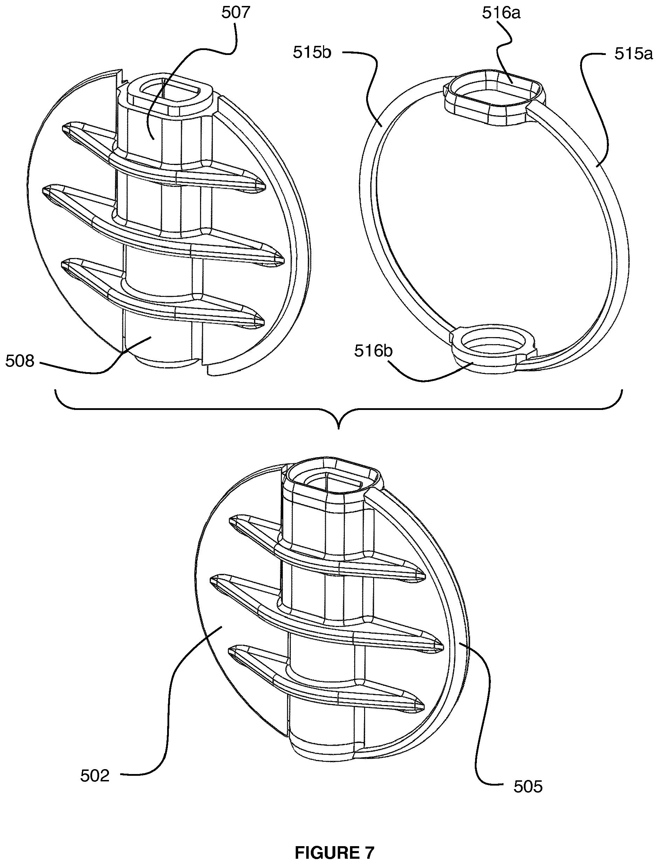

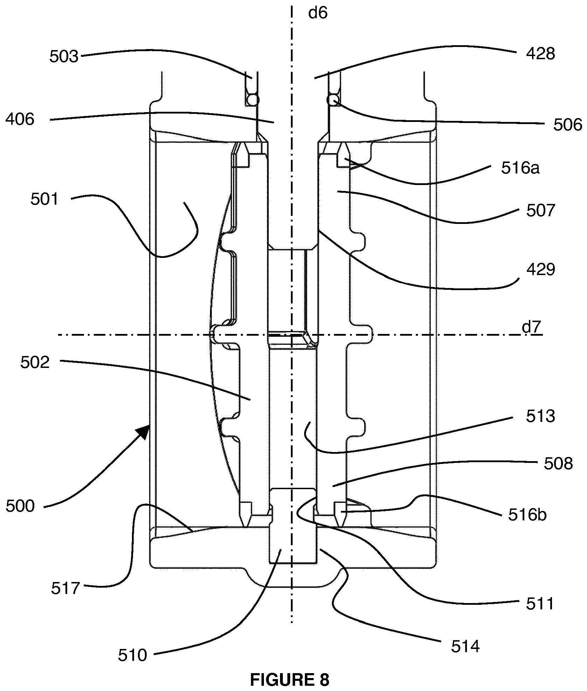

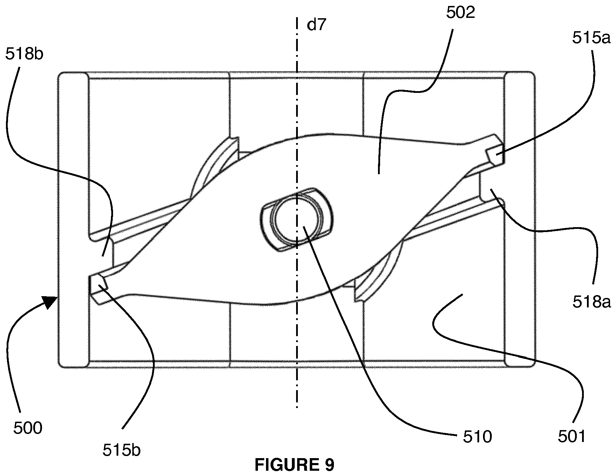

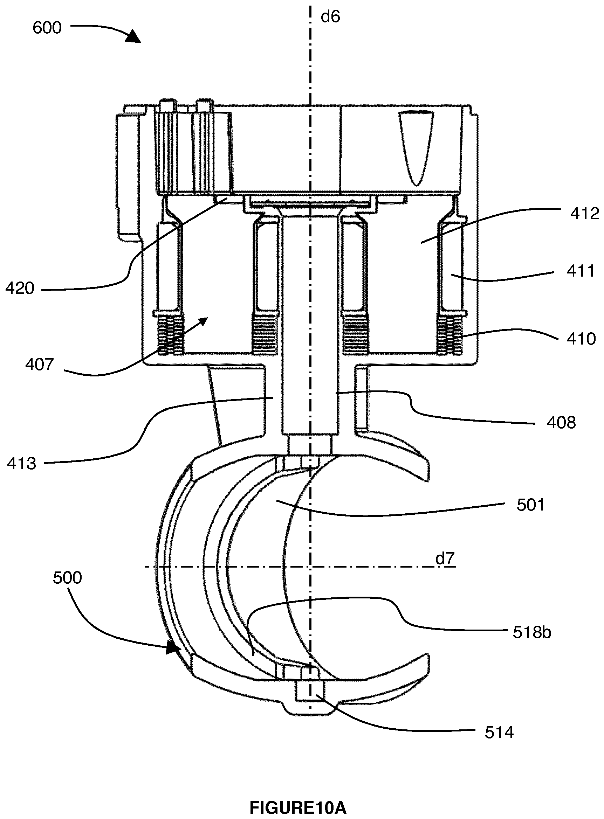

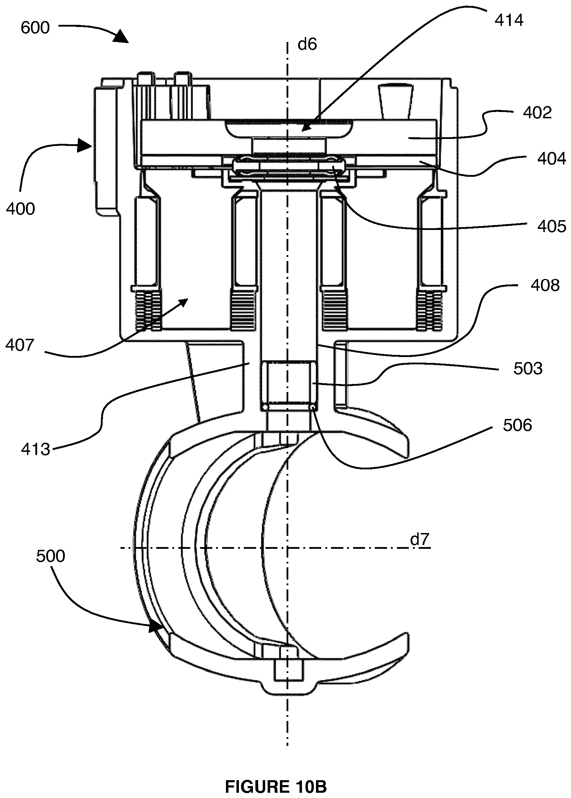

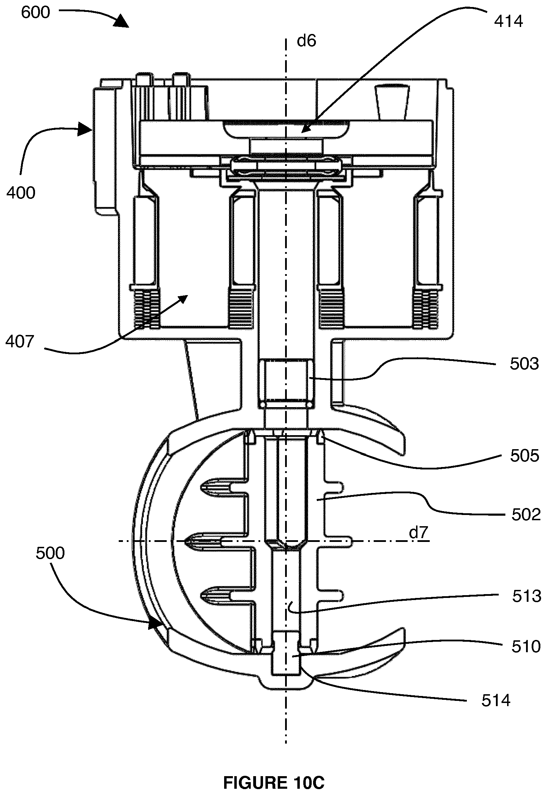

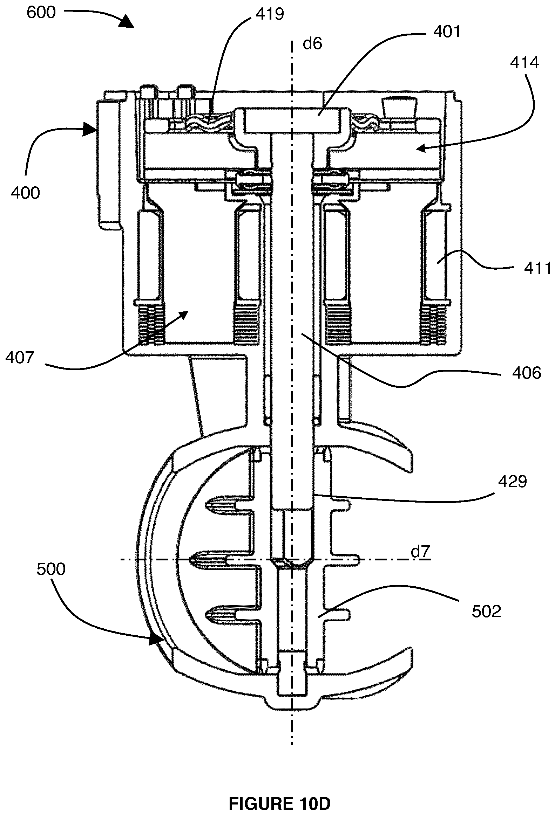

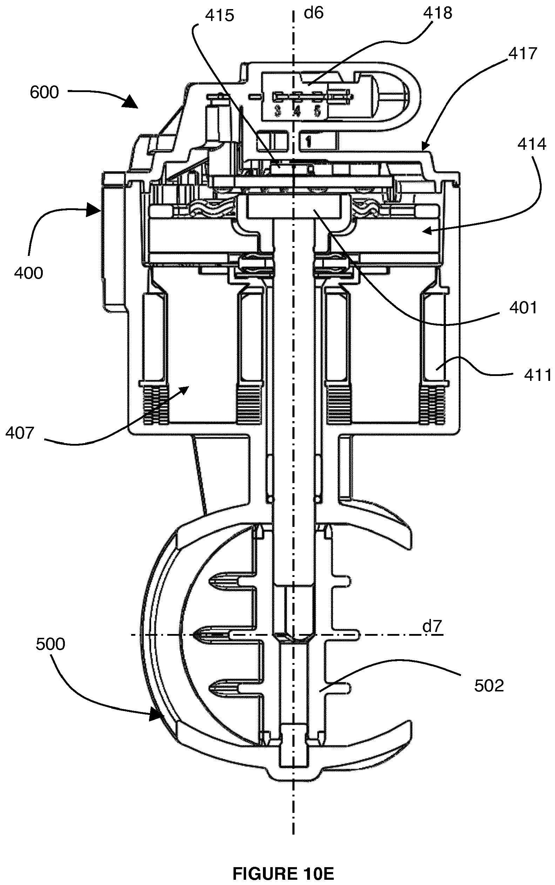

D'autres caractéristiques et avantages de l'invention ressortiront à la lecture qui suit d'exemples de réalisation détaillés, en référence aux figures annexées qui représentent respectivement :
**La** **figure 1****,** une vue de trois quart en coupe partielle d'un actionneur électromagnétique à entrainement direct selon l'art antérieur,
**La** **figure 2****,** une vue de trois quart en coupe partielle d'une vanne motorisée pilotée par un actionneur à entrainement direct selon l'art antérieur,
**La** **figure 3****,** une vue de trois quart en coupe partielle d'un mode de réalisation préférentiel d'un actionneur électromagnétique à entrainement direct selon l'invention,
**La** **figure 4A****,** une vue de détails en éclatée d'un premier mode de réalisation de l'élément de liaison entre l'arbre de transmission et le rotor de l'actionneur à entrainement direct selon l'invention,
**La** **figure 4B****,** une vue de détails en éclatée en coupe partielle d'un second mode de réalisation de l'élément de liaison entre l'arbre de transmission et le rotor de l'actionneur à entrainement direct selon l'invention,
**La** **figure 5****,** une vue en coupe partielle d'un premier mode de réalisation d'une vanne motorisée pilotée par un actionneur électromagnétique à entrainement direct selon l'invention,
**La** **figure 6A****,** une vue en coupe partielle d'un second mode de réalisation d'une vanne motorisée pilotée par un actionneur électromagnétique à entrainement direct selon l'invention,
**La** **figure 6B****,** une vue en coupe partielle d'un troisième mode de réalisation d'une vanne motorisée pilotée par un actionneur électromagnétique à entrainement direct selon l'invention,
**La** **figure 7****,** une vue de détails d'un mode de réalisation préférentiel d'un clapet d'obturation d'une vanne motorisée pilotée par un actionneur électromagnétique à entrainement direct selon l'invention,
**La** **figure 8****,** une vue de détails en coupe d'un mode de réalisation préférentiel de la partie basse du conduit d'une vanne motorisée pilotée par un actionneur électromagnétique à entrainement direct selon l'invention,
**La** **figure 9****,** une vue en coupe d'un mode de réalisation préférentiel du conduit de la vanne motorisée en position fermée pilotée par un actionneur électromagnétique à entrainement direct selon l'invention,
**La** **figure 10A****,** une vue en coupe d'un mode de réalisation préférentiel d'une phase de fabrication d'une vanne motorisée pilotée par un actionneur électromagnétique à entrainement direct selon l'invention,
**La** **figure 10B****,** une vue en coupe d'un mode de réalisation préférentiel dans une première étape d'assemblage d'une vanne motorisée pilotée par un actionneur électromagnétique à entrainement direct selon l'invention,
**La** **figure 10C****,** une vue en coupe d'un mode de réalisation préférentiel dans une deuxième étape d'assemblage d'une vanne motorisée pilotée par un actionneur électromagnétique à entrainement direct selon l'invention,
**La** **figure 10D****,** une vue en coupe d'un mode de réalisation préférentiel dans une troisième étape d'assemblage d'une vanne motorisée pilotée par un actionneur électromagnétique à entrainement direct selon l'invention,
**La** **figure 10E****,** une vue en coupe d'un mode de réalisation préférentiel dans une quatrième étape d'assemblage d'une vanne motorisée pilotée par un actionneur électromagnétique à entrainement direct selon l'invention.

### DESCRIPTION DETAILLEE DE L'INVENTION

La **figure 1** représente une vue de trois quart en coupe partielle d'un actionneur électromagnétique à entrainement direct 100 selon l'art antérieur. L'actionneur électromagnétique 100 comporte un ensemble statorique fixe 107 constitué de plusieurs pôles ferromagnétiques 112 entourés d'un bobinage 111 et reliés entre eux par une base ferromagnétique 110, l'ensemble statorique 107 étant surmoulé d'une matière plastique 113. L'actionneur 100 comporte également un ensemble rotorique 114 mobile en rotation composé d'une culasse ferromagnétique 102 portant un aimant permanent multipolaire 104. Le rotor 114 comporte également un arbre de transmission 106 emmanché en force dans la culasse 102 au niveau d'une zone spécifique 103 réalisant une liaison de type encastrement, l'extrémité inférieure 109 de l'arbre 106 étant adaptée selon l'organe à piloter. Une cible magnétique 101 sous forme d'aimant permanent est aussi fixée sur le rotor 114 au niveau de la culasse 102. Cette cible magnétique 101 collabore avec un élément sensible 115 du couvercle 117 apte à détecter la position réelle du rotor 114 relativement au stator 107. Le couvercle 117 est réalisé en matière plastique 116 et comporte une interface électrique 118, le couvercle 117 est fixé par collage ou par soudage au stator 107 par l'intermédiaire du surmoulage plastique 113.

Le rotor 114 collabore avec le stator 107 par l'intermédiaire d'une butée à billes 105 réalisant une liaison de type appui-plan et supprimant 3 degrés de liberté entre la culasse 102 et le surmoulage plastique 113, reprenant ainsi les efforts d'attraction sous l'effet de l'aimant permanent 104 et des bobines 111 et permettant une rotation relative avec un frottement minium. Le rotor 114 collabore également avec le stator 107 par l'intermédiaire d'un palier lisse ajusté 108 réalisant une liaison de type pivot glissant et supprimant 4 degrés de liberté entre l'arbre de transmission 106 et le surmoulage plastique 113. La liaison au niveau de la zone spécifique 103 entre la culasse 102 et l'arbre de transmission 106 étant de type encastrement, la liaison équivalente et résultante entre le rotor 114 et le stator 107 est une liaison de type pivot supprimant 5 degrés de liberté mais de nature hyperstatique de degré 2. Des défauts de battement entre l'axe de l'arbre de transmission 106 et le plan de la culasse 102, des défauts de perpendicularité entre l'axe du palier lisse ajusté 108 et le plan d'appui de la butée à billes 105 sur le surmoulage plastique 113, des efforts radiaux induits par l'organe piloté par l'actionneur 100 au niveau de l'extrémité 109 de l'arbre de transmission 106 vont alors induire des surcontraintes significatives, inutiles et pénalisantes sur les guidages au niveau du palier lisse et ajusté 108 et au niveau de la butée à billes 105, réduisant ainsi les performances et limitant la robustesse de l'actionneur électromagnétique 100.

La **figure 2** représente une vue de trois quart en coupe partielle d'une vanne motorisée 300 pilotée par un actionneur à entrainement direct 100 selon l'art antérieur. L'actionneur 100 est constitué d'un ensemble statorique fixe 107, d'un ensemble rotorique mobile 114 et d'un couvercle 117, le stator 107 et le rotor 114 étant en liaison pivot hyperstatique tel que décrit sur la figure 1. Le surmoulage plastique 113 du stator 107 comporte dans une zone située sous le palier lisse ajusté 108 un conduit 200 de forme tubulaire et orienté selon la droite (d2). L'arbre de transmission 106 comporte à son extrémité inférieure 109 une forme spécifique apte à recevoir et porter de manière rigide (par des vis non représentées sur la figure) un clapet d'obturation 202 apte à ouvrir plus ou moins la conduite 200 selon sa position angulaire relative. En position de pleine fermeture telle que représentée, le clapet 202 collabore et vient en contact avec la surface intérieure 201 du conduit 200 pour assurer une fermeture avec un niveau d'étanchéité donné, le clapet 202 étant entrainé en rotation par l'intermédiaire de l'arbre de transmission 106 solidaire du rotor 114 au niveau de la liaison 103. Ainsi, le positionnement axial selon la droite (d1) du clapet 202, et donc le niveau d'étanchéité atteint, relativement à la surface intérieure 201 du conduit 200 dépend de toute la chaine de cotes faisant intervenir respectivement la distance du surmoulage pastique 113 entre la droite (d2) et l'appui de la butée à billes 105, l'épaisseur de la butée à billes 105, la longueur d'emmanchement de l'arbre 106 entre la liaison 103 et son extrémité inférieure, la longueur de l'arbre 106 entre son extrémité inférieure et la zone spécifique de fixation 109 du clapet 202, la précision de la fixation du clapet 202 sur la partie 109 de l'arbre 106, le diamètre extérieur du clapet 202. Des jeux non fonctionnels et pénalisants résultant de l'empilement de toutes les tolérances de la chaine de cotes apparaissent alors au niveau de la partie supérieure 204 ou inférieure 203 entre le clapet 202 et le diamètre intérieur 201 de la conduite 200, limitant sévèrement le niveau d'étanchéité.

L'arbre de transmission 106 est flottant dans le conduit 200 et porte en porte-à-faux le clapet 202 : son extrémité inférieure n'est pas reprise ni guidée dans le conduit 200 au niveau de la zone inférieure 203 afin d'éviter d'augmenter encore le degré d'hyperstatisme de son guidage. En position fermée, les efforts induits par la pression des gaz sur le clapet 202 selon une direction parallèle à l'axe (d2) vont alors frottement solliciter et sur-contraindre le guidage de l'arbre 106, notamment au niveau du palier lisse ajusté 108 et de la butée à billes 105. Le jeu présent au niveau de la zone inférieure 203 va ainsi être augmenté, suite à la flexion par déformation élastique de l'arbre de transmission 106 et du palier lisse ajusté 108, réduisant encore les performances d'étanchéité.

La **figure 3** représente une vue de trois quart en coupe partielle d'un mode de réalisation préférentiel d'un actionneur électromagnétique 400 à entrainement direct selon l'invention. L'actionneur électromagnétique 400 comporte un ensemble statorique fixe 407 constitué de plusieurs pôles ferromagnétiques 412 entourés d'un bobinage 411 et reliés entre eux par une base ferromagnétique 410, l'ensemble statorique 407 étant surmoulé d'une matière plastique 413. L'actionneur 400 comporte également un ensemble rotorique 414 mobile en rotation composé d'une culasse ferromagnétique 402 portant un aimant permanent multipolaire 404, le rotor 414 étant lié au stator 407 par l'intermédiaire d'une butée à billes 405 prise entre la culasse 402 et le surmoulage plastique 413. L'actionneur 400 comporte aussi un couvercle 417 réalisé en matière plastique 416 et fixé au stator 407 par l'intermédiaire du surmoulage plastique 413, le couvercle 417 étant muni d'une interface électrique 418 sous forme de connecteur et d'un élément sensible 415 pour la détection de la position angulaire. Un arbre de transmission 406 est également pourvu : il comporte à son extrémité inférieure une forme spécifique 409 apte à se lier à l'application à piloter, il est solidarisé à son extrémité supérieure à un élément de liaison 419 via une liaison de type encastrement 403, réalisée par exemple par surmoulage plastique. L'élément de liaison 419 est libre relativement à la culasse via un jeu fonctionnel 421 interdisant tout contact afin d'éviter les problèmes d'hyperstatisme. L'élément de liaison 419 est muni de plusieurs moyens d'accouplement en rotation 422 aptes à transmettre le mouvement de rotation de la culasse 402 à l'arbre 406 via la liaison 403, les moyens d'accouplement 422 assurant également le positionnement de l'arbre de transmission 406. L'élément de liaison 419 intègre également une cible magnétique 401 apte à collaborer avec l'élément sensible 415 du couvercle 417. L'actionneur 400 est muni d'un système de rappel en position sous la forme d'un aimant permanent multipolaire 420 fixé sur le stator 407 au niveau des pôles ferromagnétiques 412, l'aimant de rappel fixe 420 collaborant avec l'aimant moteur mobile 404 pour créer un couple de rappel tel que, par exemple, décrit dans le brevet EP0886875.

L'arbre de transmission 406 collabore avec le stator 407 au niveau d'un palier 408 réalisé par le surmoulage plastique 413 ou par un palier rapporté (non représenté sur la figure). Selon les applications pilotées par l'actionneur 400, notamment la réalisation du guidage de l'organe à piloter, le palier 408 peut être avec un jeu fonctionnel interdisant tout contact entre l'arbre de transmission 406 et le stator 407, le guidage de l'arbre 406 étant dans ce cas assuré par les éléments de guidage de l'organe à piloter, l'arbre 406 étant solidarisé à l'organe à piloter ; le palier 408 peut aussi être ajusté pour garantir un centrage correct avec le stator 407, le palier 408 étant dans ce cas un des éléments de guidage de l'organe à piloter si l'arbre 406 est solidaire de l'organe à piloter, un système d'accouplement spécifique pouvant être nécessaire entre l'arbre 406 et l'organe à piloter si l'organe à piloter dispose de ses propres guidages.

La **figure 4A** représente une vue de détails en éclatée d'un premier mode de réalisation de l'élément de liaison 419 entre l'arbre de transmission 406 et le rotor 414 de l'actionneur 400 à entrainement direct selon l'invention. L'élément de liaison 419 est préférentiellement mais non limitativement en matière plastique, il est surmoulé et rigidement fixé sur l'arbre de transmission 406 via une partie centrale 423 solidaire de l'extrémité de l'arbre 406. Cette partie centrale 423 intègre également une surface 421 pénétrant au centre de la culasse 402 mais sans jamais venir en contact, et une cible magnétique 401 réalisée par bi-injection ou surmoulage. L'élément de liaison 419 comporte également une zone périphérique 424 présentant une haute rigidité tangentielle relativement à l'axe (d3). Cette portion annulaire extérieure 424 est équipée de moyens d'accouplement sous forme de pions d'embrayage 422 collaborant avec des logements complémentaires 426 appartenant à la culasse 402 afin de réaliser une transmission du couple moteur du rotor 414 à l'arbre de transmission 406 en supprimant tout mouvement relatif entre la culasse 402 et l'élément de liaison 419 dans une direction tangentielle à l'axe (d3). L'élément de liaison 419 comporte aussi des bras de liaison 425 permettant de solidariser la zone périphérique 424, liée en rotation à la culasse 402, à la zone centrale 423 rigidement lié à l'arbre de transmission 406. Radialement à l'axe (d3), les bras de liaison 425 présentent une longueur effective D, une section de largeur L et d'épaisseur E. Les bras de liaison 425 apportent à l'élément de liaison 419 et relativement à l'axe (d3) une haute rigidité tangentielle, proportionnelle à R_{T}=(E.L³)/(4.D³), assurant la transmission du couple du rotor 414 à l'arbre 406 sans jeu ni déphasage significatif, une bonne rigidité radiale via une bonne rigidité en traction-compression, proportionnelle à R_{R}=(E³.L)/(12.D²), assurant le maintien du positionnement avec la culasse 402, une faible rigidité axiale via une faible rigidité en flexion, proportionnelle à R_{A}=(E³.L)/(4.D³), autorisant et tolérant les défauts de coaxialité entre l'axe de rotation de la culasse 402 et l'axe de rotation de l'arbre de transmission 406. Il faut pour cela choisir les valeurs de D, L et E telles que R_{T} > 10.R_{A} et R_{R} > 2.5.R_{A}, par exemple D=10mm, L=8mm, E=2mm. L'élément de liaison 419, par l'intermédiaire de la zone périphérique 424, des bras de liaison 425 et de la partie centrale 423 crée une liaison sans jeu, reposant sur l'élasticité et la rigidité de ses différentes parties constitutives, à 3 degrés de liberté entre le rotor 414 et l'arbre de transmission 406. Cette liaison de centre Ω est de type rotule à doigt avec une translation supplémentaire : elle autorise ainsi 2 degrés de liberté en rotation autour des axes (d4) et (d5) et un degré de liberté en translation selon l'axe (d3).

La **figure 4B** représente une vue de détails en éclatée en coupe partielle d'un second mode de réalisation de l'élément de liaison 419 entre l'arbre de transmission 406 et le rotor 414 de l'actionneur 400 à entrainement direct selon l'invention. L'élément de liaison 419 est en matière plastique, il surmoule un insert métallique 427 qui est rigidement fixé par emmanchement en force sur l'extrémité supérieure de l'arbre de transmission 406. L'insert 427 comprend une zone spécifique 421b présentant des cannelures ou un moletage afin d'assurer une bonne cohésion avec l'élément de liaison 419, il intègre également une surface 421a pénétrant au centre de la culasse 402 mais sans jamais venir en contact, et une cible magnétique 401 rapportée et collée. L'élément de liaison 419 comporte également une zone périphérique 424 présentant une haute rigidité tangentielle relativement à l'axe (d3). Cette portion annulaire extérieure 424 est équipée de moyens d'accouplement sous forme de pions d'embrayage 422 collaborant avec des logements complémentaires 426 appartenant à la culasse 402 afin de réaliser une transmission du couple moteur du rotor 414 à l'arbre de transmission 406 en supprimant tout mouvement relatif entre la culasse 402 et l'élément de liaison 419 dans une direction tangentielle à l'axe (d3). L'élément de liaison 419 comporte aussi des bras de liaison 425 permettant de solidariser la zone périphérique 424 liée en rotation à la culasse 402 de la zone centrale 423 surmoulant l'insert 427 rigidement fixé à l'arbre de transmission 406. Les bras de liaison 425 réalisent la même fonction et sont dimensionnés comme décrit sur la figure 4A. L'élément de liaison 419, par l'intermédiaire de la zone périphérique 424, des bras de liaison 425, de la partie centrale 423 et de l'insert 427 crée une liaison sans jeu, reposant sur l'élasticité et la rigidité de ses différentes parties constitutives, à 3 degrés de liberté entre le rotor 414 et l'arbre de transmission 406. Cette liaison de centre Ω est de type rotule à doigt avec une translation supplémentaire : elle autorise ainsi 2 degrés de liberté en rotation autour des axes (d4) et (d5) et un degré de liberté en translation selon l'axe (d3).

La **figure 5** représente une vue en coupe partielle d'un premier mode de réalisation d'une vanne motorisée 600 pilotée par un actionneur électromagnétique à entrainement direct 400 selon l'invention. L'actionneur 400, en référence aux figures précédentes, est constitué d'un stator 407, d'un couvercle 417 et d'un rotor 414, il comporte un arbre de transmission 406 lié au rotor 414 par l'intermédiaire d'un élément de liaison 419. Le stator 407 comporte un système de rappel en position 420, il est surmoulé d'une matière plastique 413 en contact avec le couvercle 417 et s'étendant sur la partie inférieure de l'actionneur 400 pour former une conduite tubulaire 500, la surface intérieure 501 de la conduite 500 collaborant avec un clapet d'obturation 502 par l'intermédiaire d'un élément d'étanchéité 505 fixé sur la périphérie du clapet 502.

Le clapet d'obturation 502 est entrainé en rotation par l'arbre de transmission 406 qui le traverse intégralement : l'arbre 406 est muni d'une première surface spécifique 429 s'étendant axialement selon la droite (d6), un méplat par exemple, collaborant avec les 2 passages supérieur 507 et inférieur 508 de l'arbre 406 au travers du clapet 502 pour l'entrainer et rotation. L'arbre 406 est également muni d'une seconde surface spécifique 430 s'étendant circonférentiellement selon la droite (d6), une gorge par exemple, collaborant avec les clips 509 du clapet 502 pour assurer le maintien axial de l'arbre de transmission 406 selon la droite (d6), le diamètre extérieur du clapet 502 et de l'élément d'étanchéité 505 étant ajusté au diamètre de la surface intérieure 501 de la conduite 500. Ce type de montage permet de garantir un positionnement relatif optimum entre le clapet 502 et la surface 501 de la conduite 500, le positionnement ne dépendant que des tolérances de fabrication et d'ajustement du clapet 502 et de la surface 501, le clapet 502 n'étant plus axialement et directement positionné selon la droite (d6) par l'arbre de commande 406.

Pour assurer un guidage en rotation robuste et précis du clapet d'obturation 502, l'arbre de transmission 406 comporte une surface intermédiaire spécifique 428 en liaison linéaire annulaire avec un palier 503, rapporté ou directement réalisé par le surmoulage 413, dans la zone supérieure du clapet 502 appartenant au conduit 500, cette liaison supprimant 2 degrés de liberté en translation dans un premier plan situé au-dessus du clapet 502 et orthogonal à la droite (d6). Le palier 503 intègre un élément d'étanchéité dynamique 506 entre l'arbre 406 et le conduit 500 afin d'empêcher le fluide circulant dans le conduit 500 selon la direction (d7) de remonter dans l'actionneur 400 selon la direction (d6). L'arbre de transmission 406 comporte également à son extrémité inférieure une surface spécifique 431 en liaison linéaire annulaire avec un palier 504, rapporté ou directement réalisé par le surmoulage 413 dans la zone inférieure du clapet 502 appartenant au conduit 500, cette liaison supprimant 2 degrés de liberté en translation dans un second plan situé au-dessous du clapet 502 et orthogonal à la droite (d6). Les clips 509 du clapet 502, ajusté à la surface 501 de la vanne 500, collaborant avec la gorge 430 de l'arbre 406 suppriment 1 degré de liberté en translation selon la droite (d6). La liaison résultante et ainsi obtenue entre l'arbre de commande 406 et le surmoulage plastique 413 de la vanne 600 est une liaison à 1 seul degré de liberté de type pivot et de nature isostatique. L'élément de liaison 419 entre l'arbre de commande 406 et le rotor 414 de l'actionneur 400 créant une liaison de type rotule à doigt avec une translation supplémentaire, le rotor 414 étant en liaison appui-plan par l'intermédiaire de la butée à billes 405 avec le stator 407, le déplacement et la mise en position par le rotor 414 du clapet 502 par l'intermédiaire de l'arbre de commande 406 sont effectués de manière isostatique et précise, sans induire de sur-contrainte sur les éléments de guidages 503 et 504 répartis de part et d'autre du clapet 502.

La **figure 6A** représente une vue en coupe partielle d'un second mode de réalisation d'une vanne motorisée 600 pilotée par un actionneur électromagnétique à entrainement direct 400 selon l'invention. Le clapet d'obturation 502 est entrainé en rotation par l'arbre de transmission 406 : l'arbre 406 est muni d'une surface spécifique 429 s'étendant axialement selon la droite (d6), un méplat par exemple, collaborant avec le passage supérieur 507 de l'arbre 406 au travers du clapet 502 pour l'entrainer et rotation. Le diamètre extérieur du clapet 502 et de l'élément d'étanchéité 505 sont ajustés au diamètre de la surface intérieure 501 de la conduite 500 : ce type de montage permet de garantir un positionnement relatif optimum entre le clapet 502 et la surface 501 de la conduite 500, le positionnement ne dépendant que des tolérances de fabrication est d'ajustement du clapet 502 et de la surface 501, le clapet 502 n'étant plus axialement et directement positionné selon la droite (d6) par l'arbre de commande 406.

Pour assurer un guidage en rotation robuste et précis du clapet d'obturation 502, l'arbre de transmission 406 comporte une surface intermédiaire spécifique 428 en liaison linéaire annulaire ou rotule avec un palier 503, rapporté ou directement réalisé par le surmoulage 413, dans la zone supérieure du clapet 502 appartenant au conduit 500, cette liaison supprimant 2 degrés de liberté en translation dans un premier plan situé au-dessus du clapet 502 et orthogonal à la droite (d6) et supprimant éventuellement un degré de liberté en translation selon la droite (d6). Le palier 503 intègre un élément d'étanchéité dynamique 506 entre l'arbre 406 et le conduit 500 afin d'empêcher le fluide circulant dans le conduit 500 selon la direction (d7) de remonter dans l'actionneur 400 selon la direction (d6). La vanne 600 comprend également un plot 510 émergeant radialement à l'intérieur de la conduite 500, le plot 510 étant débouchant et enchâssé depuis l'extérieur dans la conduite 500, le plot 510 étant associé à un joint torique 512 pour assurer l'étanchéité. L'extrémité hémisphérique 511 du plot 510 coopère avec le palier 513 au niveau du passage 508 du clapet 502 pour former une liaison linéaire annulaire ou rotule, cette liaison supprimant 2 degrés de liberté en translation dans un second plan situé au-dessous du clapet 502 et orthogonal à la droite (d6) et supprimant éventuellement un degré de liberté en translation selon la droite (d6). Le déplacement et la mise en position par le rotor 414 du clapet 502 par l'intermédiaire de l'arbre de commande 406 est ainsi effectué de manière isostatique et précise, sans induire de sur-contrainte sur les éléments de guidages 503 et 513 répartis de part et d'autre du clapet 502.

La **figure 6B** représente une vue en coupe partielle d'un troisième mode de réalisation d'une vanne motorisée 600 pilotée par un actionneur électromagnétique 400 à entrainement direct selon l'invention. En référence à la figure 6A, la vanne 600 comprend également un plot 510 émergeant radialement à l'intérieur de la conduite 500, le plot 510 étant non débouchant et enchâssé depuis l'intérieur dans la conduite 500. Une niche 513 prévue à l'intérieur et au centre du clapet 502 au niveau de sa partie inférieure 508 permet de loger intégralement le plot 510 dans le clapet 502 au moment d'insérer le clapet 502 dans le conduit 500 selon une direction (d7). Une fois le clapet 502 en place, un élément d'assemblage (non représenté sur la figure) au travers du stator 407 de l'actionneur 400, au travers du palier supérieur 503 de la vanne 500 et au travers de la partie supérieure 507 du clapet 502 vient en contact sur la partie supérieure du plot 510 pour l'enchâsser dans l'alésage non débouchant 514 du conduit 500 selon une direction (d6). L'extrémité hémisphérique 511 du plot 510 coopère avec le palier situé en partie basse de la niche 513 au niveau du passage 508 du clapet 502 pour former une liaison linéaire annulaire ou rotule, cette liaison supprimant 2 degrés de liberté en translation dans un second plan situé au-dessous du clapet 502 et orthogonal à la droite (d6) et supprimant éventuellement un degré de liberté en translation selon la droite (d6). Le déplacement et la mise en position par le rotor 414 du clapet 502 par l'intermédiaire de l'arbre de commande 406 est ainsi effectué de manière isostatique et précise, sans induire de sur-contrainte sur les éléments de guidages 503 et 513 répartis de part et d'autre du clapet 502.

La **figure 7** représente une vue de détails d'un mode de réalisation préférentiel d'un clapet d'obturation 502 d'une vanne motorisée 600 pilotée par un actionneur électromagnétique 400 à entrainement direct selon l'invention. En référence aux figures précédentes, le clapet d'obturation 502, réalisé préférentiellement en plastique, est associé à un élément d'étanchéité 505 qui peut être réalisé par bi-injection, surmoulage du clapet 502 ou simplement fixé par collage, l'élément d'étanchéité 505 étant préférentiellement un matériau souple de type élastomère.

L'élément d'étanchéité 505 est constitué de deux branches annulaires 515a-515b localisées à la périphérie du clapet 502, chaque branche annulaire 515a et 515b étant sur une face différente du clapet 502, les branches annulaires étant prévues pour collaborer avec la paroi intérieure 501 du conduit 500 pour assurer l'étanchéité en position fermée. L'élément d'étanchéité 505 est aussi constitué de deux branches de formes sensiblement toriques 516a-516b disposées sur les deux surfaces frontales transversales entourant les passages d'arbres 507 et 508, les branches 516a et 516b étant prévues pour être en contact permanent avec la surface intérieure 501 du conduit 500 dans le but d'assurer l'étanchéité en position fermée, dans le but de rendre étanche le contact entre les arbres et le conduit, et dans le but d'interdire aux particules polluantes de venir s'agglomérer sur les arbres pour ne pas bloquer le clapet 502 en rotation. Les deux branches annulaires 515a-515b et les branches sensiblement toriques 516a-516b sont reliées entre elles afin de constituer un élément d'étanchéité 505 d'un seul tenant.

La **figure 8** représente une vue de détails en coupe d'un mode de réalisation préférentiel de la partie basse du conduit 500 d'une vanne motorisée 600 pilotée par un actionneur électromagnétique 400 à entrainement direct selon l'invention. Le clapet d'obturation 502 est équipé d'un élément d'étanchéité 505 dont seulement les branches 516a-516b situées vers les passages d'arbres 507 et 508 sont visibles. Ces deux branches 516a-516b sont en contact permanent avec la surface intérieure 501 du conduit 500 : elles protègent ainsi efficacement l'arbre 406 et le plot 510 de toutes particules polluantes pouvant venir s'introduire et bloquer la rotation du clapet 502. Ces deux branches 516a-516b participent également à l'étanchéité du conduit en position fermée dans la mesure où elles suppriment les chemins de fuite pouvant se trouver dans la zone supérieure et inférieure du clapet 502 au niveau des passages d'arbres 507-508. L'arbre de transmission 406 engage le clapet 502 au niveau du passage 507, il l'entraine en rotation via un méplat 429. L'arbre 406 est guidé par la vanne 500 avec un palier 503 en contact avec une surface spécifique 428 créant une liaison de type linéaire annulaire ou rotule, cette liaison étant étanchéifiée par un joint dynamique 506, ce joint étant redondant, et donc optionnel, avec la branche d'étanchéité 516a du clapet 502.

La partie inférieure du clapet 502 est guidée par un plot 510 fixe avec la vanne 500. Lors du montage et de l'insertion du clapet 502 dans la vanne 500 selon la direction (d7), le plot 510 est logé dans la niche 513 du clapet 502. Une fois le clapet 502 aligné avec la droite (d6), le système d'assemblage (non représenté sur la figure) vient enchâsser le plot 510 dans l'alésage non débouchant 514 de la vanne 500 au travers du palier 503 et du clapet 502, l'arbre de transmission 406 n'étant pas encore inséré. L'extrémité hémisphérique 511 du plot 510 collabore alors avec la partie basse de la niche 513 pour former une liaison de type linéaire annulaire ou rotule. Afin de protéger cette liaison et d'éviter aux particules polluantes de remonter par capillarité le long du plot 510 jusqu'à son extrémité 511, la branche d'étanchéité 516b du clapet 502 est en contact permanent avec la surface intérieure 501 de la vanne 500. Cette surface 501 comporte également une zone 517 localisée autour de la branche d'étanchéité 516b, cette zone 517 présente une forme tronconique ou pentue apte à évacuer naturellement sous l'effet de la gravité les particules polluantes susceptibles de s'accumuler à proximité du plot 510, la droite (d6) étant généralement orientée à la verticale.

La **figure 9** représente une vue en coupe d'un mode de réalisation préférentiel du conduit 500 de la vanne motorisée 600 en position fermée pilotée par un actionneur électromagnétique 400 à entrainement direct selon l'invention. La surface intérieure 501 du conduit 500 comporte deux épaulements 518a-518b pénétrant sensiblement radialement en direction de l'axe (d7) du conduit 500. Ces deux épaulement offrent une butée rigide au clapet 502 en position fermée et collaborent avec les branches périphériques d'étanchéité 515a-515b pour rendre suffisamment étanche la position fermée, les branches d'étanchéité 515a-515b venant respectivement en contact sur les épaulements 518a-518b.

La **figure 10A** représente une vue en coupe d'un mode de réalisation préférentiel d'une phase de fabrication d'une vanne motorisée 600 pilotée par un actionneur électromagnétique 400 à entrainement direct selon l'invention. Cette phase de fabrication correspond à l'opération de surmoulage du stator 407 constitué de pôles ferromagnétiques 412 entourés d'un bobinage 411 et reliés entre eux par une base ferromagnétique 410. L'élément de rappel en position 420 est déjà intégré sur les pôles 412 au niveau de la partie supérieure, légèrement en retrait de sorte à être intégralement surmoulé. Le surmoulage plastique 413 peut ainsi intégralement enserrer le stator 407, notamment sous la surface inférieure de la base 410.

Lors de cette même opération de fabrication, le surmoulage plastique 413 va réaliser le palier 408 de l'actionneur 400 et le conduit 500 de la vanne motorisée 600, le conduit 500 comprenant une surface intérieure 501, un alésage non débouchant 514 et les épaulements radiaux 518b-518a. Le surmoulage plastique 413 réalise ainsi le surmoulage de l'actionneur 400 et le conduit 500 d'un seul tenant et dans une seule opération : le surmoulage plastique 413 permet ainsi la liaison mécanique et un positionnement relatif précis entre ces deux éléments.

La **figure 10B** représente une vue en coupe d'un mode de réalisation préférentiel dans une première étape d'assemblage d'une vanne motorisée 600 pilotée par un actionneur électromagnétique 400 à entrainement direct selon l'invention. Respectivement à la figure 10A, cette première étape d'assemblage consiste à intégrer dans le palier 408 de l'actionneur 400 et selon la direction (d6) un palier de guidage rapporté 503 et un joint d'étanchéité dynamique optionnel 506. Cette première étape consiste également à intégrer le rotor 414 composé d'une butée à billes 405, d'une culasse ferromagnétique 402 et d'un aimant permanent 404. C'est également lors de cette étape d'assemblage que les tests moteurs de l'actionneur 400 sont effectués, notamment la mesure du couple moteur lorsque le bobinage 411 est alimenté, la mesure du couple de rappel issu de l'interaction entre l'aimant moteur 404 et le système de rappel 420 lorsque le bobinage 411 n'est pas alimenté et la mesure du frottement sous charge de la butée à billes.

La **figure 10C** représente une vue en coupe d'un mode de réalisation préférentiel dans une deuxième étape d'assemblage d'une vanne motorisée 600 pilotée par un actionneur électromagnétique 400 à entrainement direct selon l'invention. Respectivement à la figure 10B, cette deuxième étape d'assemblage consiste à intégrer dans le conduit 500 et selon la direction (d7) un clapet d'obturation 502 comprenant un élément d'étanchéité 505 et un plot 510 logé dans une niche 513 du clapet 502. Une fois le clapet 502 aligné sur la droite (d6), le système d'assemblage (non représenté sur la figure) vient enchâsser le plot 510 dans l'alésage non débouchant 514 de la vanne 500 au travers du rotor 414, du palier 503 et du clapet 502.

La **figure 10D** représente une vue une vue en coupe d'un mode de réalisation préférentiel dans une troisième étape d'assemblage d'une vanne motorisée 600 pilotée par un actionneur électromagnétique 400 à entrainement direct selon l'invention. Respectivement à la figure 10C, cette troisième étape d'assemblage consiste à intégrer selon une direction (d6) un arbre de transmission 406 qui va se lier en rotation via un élément de liaison 419 au rotor 414 et qui va se lier en rotation via un méplat 429 au clapet d'obturation 502. L'élément de liaison 419 comporte une cible magnétique 401.

C'est également lors de cette étape d'assemblage que les tests d'étanchéité du conduit 500 avec le clapet d'obturation 502 en position fermée sont effectués. On alimente pour cela le bobinage 411 du stator 407 afin de créer un couple dans la direction de fermeture qui sera transmis depuis le rotor 414 au clapet 502 par l'intermédiaire de l'arbre 406 et de l'élément de liaison 419.

La **figure 10E** représente une vue en coupe d'un mode de réalisation préférentiel dans une quatrième étape d'assemblage d'une vanne motorisée 600 pilotée par un actionneur électromagnétique 400 à entrainement direct selon l'invention. Respectivement à la figure 10D, cette quatrième étape d'assemblage consiste à intégrer un couvercle 417 muni d'une interface électrique 418. Le couvercle 417 est fixé sur le stator 407, il est également équipé d'un élément sensible 415 collaborant avec la cible magnétique 401 pour la détection de la position angulaire.

C'est également lors de cette étape d'assemblage que la programmation de l'élément sensible 415 relativement à la cible magnétique 401 est réalisée. On alimente une première fois le bobinage 411 du stator 407 afin d'amener le clapet 502 en position de pleine ouverture, on programme alors cette position dans l'élément sensible 415 ; on alimente une seconde fois ou on coupe l'alimentation pour avoir le couple de rappel en position, pour amener le clapet 502 en position de pleine fermeture, on programme alors cette position dans l'élément sensible 415. On effectue enfin un calcul de la linéarité du capteur de position constitué de l'élément sensible 415 et de la cible magnétique 401 en comparant sur toute la plage angulaire du clapet d'obturation 502 le signal émis par l'élément sensible 415 à un signal émis par exemple par un capteur laser appartenant au système d'assemblage (non représenté sur la figure) et pointant sur le clapet 502.

## Revendications

1. Actionneur électromagnétique rotatif présentant un axe de rotation 106, comprenant un stator fixe (107) et un rotor (114) mobile autour dudit axe, ledit rotor (114) entraînant par l'intermédiaire d'un arbre de transmission unique un organe extérieur lié audit arbre **caractérisé en ce que** la liaison entre ledit rotor (114) et ledit arbre est assurée par un moyen de liaison mécanique (419) combinant une liaison de type rotule à doigt et un degré de liberté en translation axiale.

2. Actionneur électromagnétique selon la revendication **1 caractérisé en ce que** ledit moyen de liaison mécanique est de forme discale, **en ce qu'**il est constitué par une partie centrale rigide isotropique solidaire de l'arbre de transmission, une partie périphérique rigide tangentielle liée audit rotor (114) **et en ce que** ladite partie centrale et ladite partie périphérique sont liées par l'intermédiaire de n bras (425) s'étendant radialement, chaque bras (425) présentant des rigidités tangentielle et radiale élevées, chaque bras (425) présentant une rigidité axiale faible, n étant ≥ 2, le rapport entre la rigidité tangentielle élevée et la rigidité axiale faible étant ≥ 10, le rapport entre la rigidité radiale élevée et la rigidité axiale faible étant ≥ 2.5.

3. Actionneur électromagnétique selon la revendication 1 ou 2 **caractérisé en ce que** ledit moyen de liaison mécanique est constitué par une matière plastique surmoulant et solidaire de l'extrémité dudit arbre d'entrainement, ledit surmoulage s'étendant jusqu'au rotor (114).

4. Actionneur électromagnétique selon la revendication 3 **caractérisé en ce que** ledit moyen de liaison mécanique comporte un insert métallique entre ledit surmoulage et ledit arbre de transmission.

5. Actionneur électromagnétique selon l'une quelconque des revendications précédentes **caractérisé en ce que** ledit moyen de liaison mécanique comporte une cible magnétique mobile apte à interagir avec un élément sensible récepteur, fixe par rapport à ladite cible, pour fournir un signal de position angulaire.

6. Actionneur électromagnétique selon la revendication **5 caractérisé en ce que** ladite cible magnétique est réalisée par bi-injection ou surmoulage dudit moyen de liaison mécanique.

7. Actionneur électromagnétique selon la revendication 5 **caractérisé en ce que** ladite cible magnétique est rapportée et fixée par collage sur ledit moyen de liaison mécanique.

8. Actionneur électromagnétique selon l'une quelconque des revendications précédentes **caractérisé en ce que** ledit actionneur comprend un moyen de retour en position de référence sous la forme d'une piste aimantée solidaire dudit stator (107) et apte à interagir sans contact avec ledit rotor (114) pour ramener ledit arbre de commande en une positon prédéterminée par l'intermédiaire dudit moyen de liaison mécanique, lorsque ledit stator (107) n'est plus alimenté en énergie.

9. Procédé d'assemblage d'un actionneur électromagnétique selon l'une quelconque des revendications précédentes **caractérisé en ce qu'**il comprend au moins deux étapes, **en ce qu'**une première étape consiste à intégrer ledit rotor (114) audit stator (107) **et en ce qu'**une deuxième étape consiste à insérer ledit arbre équipé dudit moyen de liaison mécanique au travers dudit rotor (114) et dudit stator (107).

10. Procédé selon la revendication 9 d'assemblage d'un actionneur électromagnétique selon la revendication 5 **caractérisé en ce qu'**il comporte une troisième étape consistant à fixer audit stator (107) un couvercle comportant ledit élément sensible récepteur.

11. Vanne motorisée comprenant un actionneur électromagnétique selon l'une quelconque des revendications 1 à 8 et composée d'un conduit et d'un clapet apte à obturer ledit conduit.

12. Vanne motorisée selon la revendication 11 **caractérisée en ce que** ledit arbre de transmission est guidé par deux paliers seulement disposés de part et d'autre dudit clapet dans la zone du conduit.

13. Vanne motorisée selon la revendication 12 **caractérisée en ce que** lesdits paliers forment des liaisons de type linéaire annulaire avec ledit arbre de transmission.

14. Vanne motorisée selon la revendication 13 **caractérisée en ce que** le palier inférieur, opposé à l'actionneur, est constitué par un plot en érection par rapport à la paroi intérieure du conduit, et coopérant avec un logement complémentaire prévu dans le clapet.

15. Vanne motorisée selon la revendication 14 **caractérisée en ce que** ledit plot présente une tête hémisphérique apte à former avec ledit logement complémentaire une liaison de type rotule ou de type linéaire annulaire.

16. Vanne motorisée selon la revendication 15 **caractérisée en ce que** la surface intérieure dudit conduit présente une zone localisée autour dudit plot ayant une forme tronconique ou pentue apte à évacuer naturellement sous l'effet de la gravité les particules polluantes susceptibles de s'accumuler à proximité dudit plot.

17. Vanne motorisée selon l'une quelconque des revendications 12 à 16 **caractérisée en ce que** le palier du guidage supérieur dudit clapet prévu entre ledit arbre de transmission et ledit stator (107) est un palier enchâssé dans le corps en matière plastique dudit conduit, ledit palier étant étanchéifié par un joint entourant ledit arbre.

18. Vanne motorisée selon l'une quelconque des revendications 12 à 17 **caractérisée en ce que** ledit clapet est entouré par un joint périphérique s'étendant sur les deux branches annulaires aptes à venir en appui contre deux épaulements prévus sur la paroi intérieure dudit conduit, et sur les deux surfaces frontales transversales entourant les passages d'arbres.

19. Procédé d'assemblage d'une vanne motorisée selon l'une quelconque des revendications 11 à 18 **caractérisé en ce qu'**il comprend au moins trois étapes, **en ce qu'**une première étape consiste à intégrer ledit rotor (114) à ladite vanne, **en ce qu'**une deuxième étape consiste à intégrer ledit clapet dans la dite conduite **et en ce qu'**une troisième étape consiste à insérer ledit arbre de transmission équipé dudit moyen de liaison mécanique au travers de ladite vanne.

20. Procédé d'assemblage d'une vanne motorisée selon la revendication 19 **caractérisé en ce que** la vanne comprenant un actionneur selon la revendication 5, le procédé comporte une quatrième étape consistant à fixer à ladite vanne un couvercle comportant ledit élément sensible récepteur.

## Patentansprüche

1. Drehbares Magnetstellwerk, das eine Drehachse 106 vorweist, umfassend einen feststehenden Stator (107) und einen Rotor (114), der um die Achse herum bewegbar ist, wobei der Rotor (114) durch eine einzige Übertragungswelle ein externes Bauteil antreibt, das mit der Welle verbunden ist, **dadurch gekennzeichnet, dass** die Verbindung zwischen dem Rotor (114) und der Welle durch ein mechanisches Verbindungsmittel (419) sichergestellt ist, das eine Verbindung einer Fingerkugelgelenkart und einen Freiheitsgrad in axialer Verschiebung kombiniert.

2. Magnetstellwerk nach Anspruch 1, **dadurch gekennzeichnet, dass** das mechanische Verbindungsmittel scheibenförmig ist, **dass** es aus einem steifen isotropen Mittelteil, der mit der Übertragungswelle fest verbunden ist, einem steifen tangentialen Umfangsteil besteht, der mit dem Rotor (114) verbunden ist, **und dadurch, dass** der Mittelteil und der Umfangsteil durch n Arme (425) verbunden sind, die sich radial erstrecken, wobei jeder Arm (425) hohe Tangential- und Radialsteifheiten vorweist, jeder Arm (425) geringe Axialsteifheit vorweist, n ≥ 2 ist, das Verhältnis von der hohen Tangentialsteifheit zu der geringen Axialsteifheit ≥ 10 ist, das Verhältnis zwischen der hohen Radialsteifheit zu der geringen Axialsteifheit ≥ 2,5 ist.

3. Magnetstellwerk nach Anspruch 1 oder 2, **dadurch gekennzeichnet, dass** das mechanische Verbindungsmittel aus einem Kunststoffmaterial besteht, das das Ende der Antriebswelle konfektioniert und mit diesem fest verbunden ist, wobei sich die Konfektionierung bis zu dem Rotor (114) erstreckt.

4. Magnetstellwerk nach Anspruch 3, **dadurch gekennzeichnet, dass** das mechanische Verbindungsmittel einen Metalleinsatz zwischen der Konfektionierung und der Übertragungswelle aufweist.

5. Magnetstellwerk nach einem der vorstehenden Ansprüche, **dadurch gekennzeichnet, dass** das mechanische Verbindungsmittel ein bewegbares magnetisches Ziel aufweist, das geeignet ist, um mit einem empfindlichen Empfangselement, das bezogen auf das Ziel feststehend ist, zum Bereitstellen eines Winkelpositionssignals zusammenzuwirken.

6. Magnetstellwerk nach Anspruch **5, dadurch gekennzeichnet, dass** das magnetische Ziel durch Doppeleinspritzung oder Konfektionierung des mechanischen Verbindungsmittels hergestellt ist.

7. Magnetstellwerk nach Anspruch 5, **dadurch gekennzeichnet, dass** das magnetische Ziel durch Kleben an dem mechanischen Verbindungsmittel angebracht und befestigt ist.

8. Magnetstellwerk nach einem der vorstehenden Ansprüche, **dadurch gekennzeichnet, dass** das Stellwerk ein Mittel eines Rückführens in eine Referenzposition in Form einer Magnetbahn umfasst, die mit dem Stator (107) fest verbunden und geeignet ist, um ohne Kontakt mit dem Rotor (114) zum Zurückbringen der Steuerungswelle in eine zuvor bestimmte Position durch das mechanische Verbindungsmittel zusammenzuwirken, wenn der Stator (107) nicht länger mit Energie versorgt wird.

9. Verfahren zum Zusammenbauen eines Magnetstellwerks nach einem der vorstehenden Ansprüche, **dadurch gekennzeichnet, dass** es mindestens zwei Schritte umfasst, **dass** ein erster Schritt darin besteht, den Rotor (114) in den Stator (107) einzufügen, **und dass** ein zweiter Schritt darin besteht, die Welle, die mit dem mechanischen Verbindungsmittel ausgestattet ist, über den Rotor (114) und den Stator (107) einzusetzen.

10. Verfahren nach Anspruch 9 zum Zusammenbauen eines Magnetstellwerks nach Anspruch 5, **dadurch gekennzeichnet, dass** es einen dritten Schritt aufweist, der darin besteht, an dem Stator (107) eine Abdeckung zu befestigen, die das empfindliche Empfangselement aufweist.

11. Motorventil, umfassend ein Magnetstellwerk nach einem der Ansprüche 1 bis 8 und das aus einer Leitung und einer Klappe besteht, die geeignet ist, um die Leitung zu verschließen.

12. Motorventil nach Anspruch 11, **dadurch gekennzeichnet, dass** die Übertragungswelle durch nur zwei Lager geführt wird, die auf beiden Seiten der Klappe in dem Leitungsbereich angeordnet sind.

13. Motorventil nach Anspruch 12, **dadurch gekennzeichnet, dass** die Lager mit der Übertragungswelle Verbindungen einer linearen ringförmigen Art ausbilden.

14. Motorventil nach Anspruch 13, **dadurch gekennzeichnet, dass** das untere Lager gegenüber dem Stellwerk aus einem bezogen auf die Innenwand der Leitung aufrechten Zapfen besteht, und mit einer komplementären Aufnahme zusammenwirkt, die in der Klappe vorgesehen ist.

15. Motorventil nach Anspruch 14, **dadurch gekennzeichnet, dass** der Zapfen einen halbkugelförmigen Kopf vorweist, der geeignet ist, mit der komplementären Aufnahme eine Verbindung einer Kugelgelenkart oder der linearen ringförmigen Art auszubilden.

16. Motorventil nach Anspruch 15, **dadurch gekennzeichnet, dass** die Innenoberfläche der Leitung um den Zapfen herum einen lokalisierten Bereich vorweist, der eine kegelstumpfförmige oder abschüssige Form besitzt, die geeignet ist, um unter der Wirkung der Schwerkraft die Schadstoffpartikel natürlich abzuführen, die imstande sind, sich in der Nähe des Zapfens anzusammeln.

17. Motorventil nach einem der Ansprüche 12 bis 16, **dadurch gekennzeichnet, dass** das Lager der oberen Führung der Klappe, das zwischen der Übertragungswelle und dem Stator (107) vorgesehen ist, ein Lager ist, das in den Kunststoffmaterialkörper der Leitung eingebettet ist, wobei das Lager durch eine Dichtung abgedichtet ist, die die Welle umgibt.

18. Motorventil nach einem der Ansprüche 12 bis 17, **dadurch gekennzeichnet, dass** die Klappe durch eine Umfangsdichtung umgeben ist, die sich über die zwei ringförmigen Schenkel erstreckt, die geeignet sind, um gegen zwei Schultern, die an der Innenwand der Leitung vorgesehen sind, und an den zwei queren Vorderoberflächen anzuliegen, die die Wellendurchgänge umgeben.

19. Verfahren zum Zusammenbauen eines Motorventils nach einem der Ansprüche 11 bis 18, **dadurch gekennzeichnet, dass** es mindestens drei Schritte umfasst, **dass** ein erster Schritt darin besteht, den Rotor (114) in das Ventil einzufügen, **und dass** ein zweiter Schritt darin besteht, die Klappe in die Leitung einzufügen, **und dass** ein dritter Schritt darin besteht, die Übertragungswelle, die mit den mechanischen Verbindungsmittel ausgestattet ist, über das Ventil einzusetzen.

20. Verfahren zum Zusammenbauen eines Motorventils nach Anspruch 19, **dadurch gekennzeichnet, dass** das Ventil ein Stellwerk nach Anspruch 5 umfasst, wobei das Verfahren einen vierten Schritt aufweist, der darin besteht, an dem Ventil eine Abdeckung zu befestigen, umfassend das empfindliche Empfangselement.

## Claims

1. Rotary electromagnetic actuator having an axis of rotation 106, comprising a fixed stator (107) and a rotor (114) which is movable about said axis, said rotor (114) driving, via a single transmission shaft, an external member linked to said shaft, **characterized in that** the connection between said rotor (114) and said shaft is ensured by a mechanical connection means (419) combining a ball-and-socket connection and a degree of freedom in axial translation.

2. Electromagnetic actuator according to claim 1, **characterized in that** said mechanical connection means is disc-shaped, **in that** it consists of an isotropic rigid central portion integral with the transmission shaft, and a tangential rigid peripheral portion linked to said rotor (114), **and in that** said central portion and said peripheral portion are linked via n arms (425) extending radially, each arm (425) having high tangential and radial stiffness, each arm (425) having low axial stiffness, n being ≥ 2, the ratio of high tangential stiffness to low axial stiffness being ≥ 10, the ratio of high radial stiffness to low axial stiffness being ≥ 2.5.

3. Electromagnetic actuator according to either claim 1 or claim 2, **characterized in that** said mechanical connection means consists of a plastics material which is overmolded onto and integral with the end of said drive shaft, said overmolding extending as far as the rotor (114).

4. Electromagnetic actuator according to claim 3, **characterized in that** said mechanical connection means comprises a metal insert between said overmolding and said transmission shaft.

5. Electromagnetic actuator according to any of the preceding claims, **characterized in that** said mechanical connection means comprises a moveable magnetic target capable of interacting with a sensitive receiver element which is fixed with respect to said target, in order to provide an angular position signal.

6. Electromagnetic actuator according to claim **5, characterized in that** said magnetic target is produced by bi-injection molding or overmolding of said mechanical connection means.

7. Electromagnetic actuator according to claim 5, **characterized in that** said magnetic target is mounted and fixed by adhesion to said mechanical connection means.

8. Electromagnetic actuator according to any of the preceding claims, **characterized in that** said actuator comprises a means for returning to the reference position in the form of a magnetic track which is integral with said stator (107) and capable of interacting, without contact, with said rotor (114) to return said control shaft to a predetermined position via said mechanical connection means, when said stator (107) is no longer energized.

9. Method of assembling an electromagnetic actuator according to any of the preceding claims, **characterized in that** it comprises at least two steps, **in that** a first step consists in integrating said rotor (114) with said stator (107), **and in that** a second step consists in inserting said shaft equipped with said mechanical connection means through said rotor (114) and said stator (107).

10. Method according to claim 9 for assembling an electromagnetic actuator according to claim 5, **characterized in that** it comprises a third step consisting in fixing to said stator (107) a cover comprising said sensitive receiving element.

11. Motor-driven valve comprising an electromagnetic actuator according to any of claims 1 to 8 and consisting of a duct and a flap capable of closing off said duct.

12. Motor-driven valve according to claim 11, **characterized in that** said transmission shaft is guided by only two bearings arranged on either side of said flap in the zone of the duct.

13. Motor-driven valve according to claim 12, **characterized in that** said bearings form annular linear connections with said transmission shaft.

14. Motor-driven valve according to claim 13, **characterized in that** the lower bearing, opposite the actuator, consists of a contact which is erect with respect to the inner wall of the duct, and which cooperates with a complementary housing provided in the flap.

15. Motor-driven valve according to claim 14, **characterized in that** said contact has a hemispherical head capable of forming a ball-and-socket connection or an annular linear connection with said complementary housing.

16. Motor-driven valve according to claim 15, **characterized in that** the inner surface of said duct has a localized zone around said contact that has a frustoconical or sloping shape capable of naturally removing, under the effect of gravity, the polluting particles likely to accumulate near said contact.

17. Motor-driven valve according to any of claims 12 to 16, **characterized in that** the upper guide bearing of said flap provided between said transmission shaft and said stator (107) is a bearing embedded in the plastics body of said duct, said bearing being sealed by a seal surrounding said shaft.

18. Motor-driven valve according to any of claims 12 to 17, **characterized in that** said flap is surrounded by a peripheral seal extending over the two annular branches capable of bearing against two shoulders provided on the inner wall of said duct, and on the two transverse front surfaces surrounding the shaft passages.

19. Method of assembling a motor-driven valve according to any of claims 11 to 18, **characterized in that** it comprises at least three steps, **in that** a first step consists in integrating said rotor (114) into said valve, **in that** a second step consists in integrating said flap into said duct, **and in that** a third step consists in inserting said transmission shaft equipped with said mechanical connection means through said valve.

20. Method of assembling a motor-driven valve according to claim 19, **characterized in that,** with the valve comprising an actuator according to claim 5, the method comprises a fourth step consisting in fixing to said valve a cover comprising said sensitive receiving element.
